# EUROPEAN PATENT APPLICATION

(11) **EP 3 498 798 A1**
(43) Date of publication of application: **19.06.2019**
(21) Application number: 17206751.4
(22) Date of filing: 12.12.2017
(51) Int. Cl.: C09J 123/02

(54) **POLYOLEFIN HOT-MELT ADHESIVE AND USE THEREOF FOR BONDING OF PLASTIC FOAM PLATES**

(71) Applicant: SIKA TECHNOLOGY AG, 6340 Baar (CH)
(72) Inventor: Janke, Doreen, 25486 Alveslohe (DE); FUNKE, Björn, 21339 Lüneburg (DE); Günther, Andreas, 21614 Buxtehude (DE); Plaumann, Jörg, 21075 Hamburg (DE)
(74) Representative: Sika Patent Attorneys

(57) **Abstract**

The invention relates to an adhesive composition, which can be used for bonding of polystyrene foam plates. The adhesive composition comprises at least one atactic poly-α-olefin that is solid at a temperature of 25 °C, at least one hydrocarbon resin having a softening point measured by Ring and Ball method according to DIN EN 1238 in the range of 70 - 130 °C, and at least one halogen containing flame retardant. The invention is also related to the use of the adhesive composition for bonding of polystyrene foam plates, to a method for producing a composite element, and to a composite element comprising a first and second substrate bonded to each other with a layer of adhesive composition of the present invention.

## Description

### Technical field

The invention relates to polyolefin hot-melt adhesives and use thereof for producing plastic foam plate composites comprising at least two plastic foam plates, in particular extruded expanded polystyrene (XPS) foam plates. The invention also relates to a method for forming composite elements comprising at least two plastic foam plates.

### Background of the invention

Polystyrene foams like molded expanded polystyrene (EPS) foam and extruded expanded polystyrene (XPS) foam are known as good thermal insulators. These materials have been used, for example, as building insulation materials such as in insulating concrete forms and structured insulation panels. Expanded polystyrene foams are closed cell foams, which are produced using blowing agents. In producing of EPS foams hydrocarbons such as pentane is typically used as a blowing agent whereas XPS foams are usually produced with hydrofluorocarbons. Due to the environmental concerns related to the use of hydrofluorocarbons, in particular the damaging effects to the ozone layer, these compounds have been replaced by other propellants in production of XPS foams.

Both EPS and XPS foam panels have been used for providing insulation of the entire building envelope. Due to their higher stiffness and greater moisture resistance, XPS foam panels are typically used in below-grade waterproofing systems and in roofing systems where insulation panel is placed on top of the roof membrane. Since the thermal insulation properties are directly proportional to the thickness of the panel, the insulation effect can be improved by using thicker panels. However, increasing the thickness of XPS panels has been found out to be difficult when using other propellants than hydrofluorocarbons. The problems related to production of thicker XPS panels have been solved by producing composite elements composed of multiple thin XPS panels. The State-of-the-Art techniques for bonding XPS panels include, for example, solvent welding, thermal welding and adhesive bonding. Thermal welding provides a high strength bond between the XPS panels but it also results in formation of a barrier layer between the panels reducing the water vapor permeability of the XPS panel, which is usually not desired. In order to avoid the negative impact on the water vapor permeability of the composite insulation element, bonding of the XPS panels with adhesive means has been suggested. For example, EP1213118 B1 discloses a method for joining at least two hydrofluorocarbon (HCFC) free XPS starting boards to produce a new board having a thickness of at least 70 mm, in which method the starting boards are adhered to each other using a water vapor permeable adhesive, such as a reactive adhesive or a reactive hot-melt adhesive.

One of the disadvantages of joining XPS plates by gluing is related to the tendency of the adhesive to increase the flammability of the composite element. In order to fulfil the fire proof requirements, building materials and components must pass the fire proof test B2 according to DIN 4102, corresponding to EN ISO 11925-2:2011-02 standard ("Ignitability of products subjected to direct impingement of flame"). Even though the individual XPS plates and the adhesive would fulfill the fire proof requirements, the same is not necessarily true for the composite element composed of multiple thin XPS plates bonded to each other using the adhesive. The negative impact of the adhesive to the flammability of the composite element is believed to result from a "wicking effect", i.e. from the tendency of the adhesive layers to melt and to intensify the burning process.

For the above mentioned reasons, polyurethane hot-melt adhesives, in particular reactive polyurethane hot-melt adhesives (PUR-HM) have been commonly used for gluing of XPS plates. These types of adhesives show a good adhesion on polystyrene substrates, a high thermal stability, and lower flammability compared, for example, to polyolefin hot-melt adhesives (PO-HM). However, reactive polyurethane adhesives typically contain significant quantities of unreacted monomeric isocyanates or polyisocyanates, in particular diisocyanate monomers. Heating of the hot-melt adhesives to typical application temperature, such as from 85 to 200°C, in particular from 120 to 160°C, raises the vapor pressure of the unreacted diisocyanate monomers and causes them to volatilize. Due to the toxicity of the monomeric isocyanates, the legislator in the EU also requires these products to be labeled as harmful (Xn), if their unreacted monomeric diisocyanate content exceeds the limit of 0.1 % by weight. The problems caused by volatilization of non-reacted diisocyanate monomers during application of the hot-melt adhesive can be at least partially solved by providing ventilated structures such as "down draft booths". These solutions are, however, costly and sometimes difficult to apply.

There is thus a need for a novel polyolefin hot-melt adhesive, which can be used for formation of multilayer composite XPS foam elements, and which fulfil the fireproof requirements, i.e. which pass the fire proof test according to EN ISO 11925-2:2011-02 standard.

### Summary of the invention

The object of the present invention is to provide an adhesive composition, which overcomes or at least mitigates the disadvantages of the prior art adhesive compositions used for bonding of polystyrene foam panels as discussed above.

In particular, it is an object of the present invention to provide a polyolefin based hot-melt adhesive composition, which can be used for providing multilayer composite polystyrene foam elements, which pass the fire proof test according to EN ISO 11925-2:2011-02 standard.

The subject of the present invention is an adhesive composition as defined in claim 1.

It was surprisingly found out that the fire resisting properties of a multilayer composite polystyrene foam element obtained using an adhesive composition can be significantly improved by addition of a particular flame retardant to the adhesive composition. The improved fire resistance is attributable to the use of the adhesive composition containing the flame retardant, whereby the wicking effect is completely suppressed or at least significantly reduced. It was also surprisingly found out that the wicking effect can be eliminated without having a negative impact on other application related properties, such as thermal stability and tensile strength of the cured adhesive bond.

One of the advantages of the adhesive composition of the present invention is that it can be used for providing multilayer composite elements composed of polystyrene foam plates, which composite elements pass the fire proof test according to EN ISO 11925-2:2011-02 standard.

Another advantage of the adhesive composition of the present invention is that multilayer composite elements of polystyrene foam plates formed by using the adhesive composition fulfill the mechanical stability requirements as defined in FprEN 1607:2012 standard, in particular the requirement for tensile shear strength.

Other aspects of the present invention are presented in other independent claims. Preferred aspects of the invention are presented in the dependent claims.

### Detailed description of the invention

The subject of the present invention is an adhesive composition comprising:
a) At least one atactic poly-α-olefin that is solid at a temperature of 25 °C,
b) At least one hydrocarbon resin having a softening point measured by Ring and Ball method according to DIN EN 1238 in the range of 70 - 160 °C, and
c) At least one halogen containing flame retardant.

The term "a-olefin" designates an alkene having the molecular formula CₓH2ₓ (x corresponds to the number of carbon atoms), which features a carbon-carbon double bond at the first carbon atom (a-carbon). Examples of α-olefins include ethylene, propylene, 1-butene, 2-methyl-1-propene (isobutylene), 1-pentene, 1-hexene, 1-heptene and 1-octene. For example, neither 1,3-butadiene, nor 2-butene, nor styrene are referred as "a-olefins" according to the present disclosure.

The term "poly-α-olefin" designates homopolymers and copolymers obtained by polymerization or oligomerization of α-olefins or multiple distinct α-olefins.

The term "polyolefin wax" designates low molecular weight polymers of linear or branched α-olefins having from 2 to 30 carbon atoms and a number average molecular weight (Mₙ) in the range of 5,000 - 25,000 g/mol. They include both homopolymers and copolymers of the above mentioned linear or branched α-olefins. Polyolefin waxes can be obtained by thermal decomposition of polyolefin plastics, in particular polyethylene plastic, or by direct polymerization of olefins. Suitable polymerization processes include, for example, free-radical processes, where the olefins, for example, ethylene, are reacted at high pressures and temperatures to give more or less branched waxes and processes, where ethylene and/or higher α-olefins, in particular propylene, are polymerized using metalorganic catalysts, for example Ziegler-Natta or metallocene catalysts, to give unbranched or branched waxes. The polyolefin waxes have generally at least partially crystalline structure.

The term "functionalized polymer" designates polymers which are chemically modified so as to contain one or more functional groups on the polymer backbone. In contrast, the term "non-functionalized polymer" designates polymers which are not chemically modified so as to contain functional groups, for example, epoxy, silane, sulfonate, amide, or anhydride groups, on the polymer backbone. In the present document the terms "non-functionalized and "unmodified" are used interchangeably.

The term "molecular weight" refers to the molar mass (g/mol) of a molecule or a part of a molecule, also referred to as "moiety". The term "average molecular weight" refers to number average molecular weight (Mₙ) of an oligomeric or polymeric mixture of molecules or moieties.

The term "softening point" or "softening temperature" designates a temperature at which compound softens in a rubber-like state, or a temperature at which the crystalline portion within the compound melts. The softening point can be measured by a Ring and Ball method according to DIN EN 1238.

The term "open time" designates the length of a time period during which an adhesive applied to a surface of a substrate is still able to form an adhesive bond after being contacted with another substrate.

The "amount of at least one component X" in a composition, for example "the amount of the at least one atactic poly-α-olefin" refers in the present document to the sum of the individual amounts of all atactic poly-α-olefins contained in the composition. For example, in case the composition comprises 20 wt.-% of at least one atactic poly-α-olefin, the sum of the amounts of all atactic poly-α-olefins contained in the composition equals 20 wt.-%.

The term "room temperature" refers to a temperature of ca. 23 °C.

The adhesive composition of the present invention comprises at least one halogen containing flame retardant. The fire retarding properties of the adhesive composition can be improved by increasing the amount of the halogen containing flame retardant in the adhesive composition. However, it has been also found out that increasing the amount of the flame retardant tends to have a negative impact on the other adhesive properties, in particular the tensile strength of the cured adhesive layer. In case the adhesive composition is used for bonding polystyrene foam panels, the amount of the at least one halogen containing flame retardant cannot be increased above a certain limit without decreasing the tensile shear strength of the adhesive bond below a level, at which the requirements for the mechanical stability of the composite element are not anymore met.

Preferably, the at least one halogen containing flame retardant is present in the adhesive composition in an amount of 0.25 - 20.0 wt.-%, more preferably 0.5 - 15.0 wt.-%, even more preferably 0.5 - 12.5 wt.-%, most preferably 1.0 - 10.0 wt.-%, based on the total weight of the adhesive composition. Adhesive compositions comprising the at least one halogen containing flame retardant in amounts within the above cited ranges have been found out to enable production of multilayer composite polystyrene foam elements, which fulfil the requirements of the fire proof test according to EN ISO 11925-2:2011-02 standard as well as the mechanical stability requirements as defined in FprEN 1607:2012 standard.

Halogen-containing flame-retardants which are useful in the present invention comprise, for example, brominated and chlorinated aliphatic compounds and compounds containing aromatically bound bromine. Preferably, the at least one halogen containing flame retardant is a brominated flame retardant. It may be advantageous that the at least one halogen containing flame retardant is selected from the group consisting of tetradimensionale A bis (2,3-dibromopropylether), tetrabromobisphenol A bis (2,3-dibromo-2-methylpropyl ether), decabromodiphenyl ethane, decabromodiphenyl oxide, ethylenebistetrabromo phthalimide, bis (tribromophenoxy) ethane, 2,4,6 tris(2,4,6 tribromophenoxy) 1,3,5 triazine, and tris (2,3 dibromopropyl) isocyanurate. Flame retardants included in the above presented list have been found to be suitable for lowering the flammability of polyolefin based adhesive compositions without having negative impact on the other adhesive properties.

According to one or more embodiments, the at least one halogen containing flame retardant is selected from the group consisting of tetradimensionale A bis (2,3-dibromopropylether), tetrabromobisfenol A bis (2,3-dibromo-2-methylpropyl ether), and decabromodiphenyl ethane. Flame retardants included in the above presented list have been found to be particularly suitable for lowering the flammability of polyolefin based adhesive compositions without having negative impact on the other adhesive properties.

According to one or more further embodiments, the at least one halogen containing flame retardant is selected from the group consisting of tetradimensionale A bis (2,3-dibromopropylether) and tetrabromobisfenol A bis (2,3-dibromo-2-methylpropyl ether), wherein the at least one halogen containing flame retardant is present in the adhesive composition in an amount of 2.5 - 15.0 wt.-%, preferably 3.0 - 12.5, more preferably 3.5 - 10.0 wt.-%, most preferably 4.0 - 7.5 wt.-%, based on the total weight of the adhesive composition.

According to one or more further embodiments, the at least one halogen containing flame retardant is decabromodiphenyl ethane, wherein the at least one halogen containing flame retardant is present in the adhesive composition in an amount of 5.0 - 20.0 wt.-%, preferably 6.0 - 15.0, more preferably 7.0 - 15.0 wt.-%, most preferably 8.0 - 12.5 wt.-%, based on the total weight of the adhesive composition.

It has been furthermore found that the fire resisting properties of the adhesive composition can be further improved by including to the adhesive composition auxiliary flame retarding agents, which may have a synergistic effect with the at least one halogen containing flame retardant. The use of these auxiliary flame retarding agents also enables reducing the amount of the at least one halogen containing flame retardant, which may be desired due to restrictions related to the use of halogen containing compounds in adhesives.

According to one or more embodiments, the adhesive composition further comprises at least one inorganic flame retardant agent different from the at least one halogen containing flame retardant. Suitable inorganic flame retardant agents include, for example, antimony oxide, barium oxide, magnesium oxide, magnesium hydroxide, silicon dioxide, titanium dioxide, zinc oxide, aluminum oxide, aluminum hydroxide, as well as borates-, phosphates-, and sulfamates- of zinc, magnesium, calcium, barium and aluminum.

According to one or more embodiments, the adhesive composition comprises at least one of antimony oxide, preferably antimony trioxide (ATO), and zinc borate. It may be preferable that the adhesive composition comprises antimony oxide, preferably antimony trioxide (ATO), and zinc borate. The term "zinc borate" refers to compounds having the general formula:
(ZnO)ₓ(B₂O₃)_{Y}(H2O)_{z}, wherein x is preferably between 2 and 4, y is preferably between 1 and 3, and z is preferably between 0 and 5, more preferably 0. It may, for example, be preferably that the term "zinc borate" refers to compounds of the general formula (ZnO)ₓ(B₂O₃)_{Y}(H2O)_{z}, wherein x is 2, y is 3, and z is 0.

It may be advantageous that the adhesive composition comprises 0.05 - 5.00 wt.-%, preferably 0.25 - 4.00 wt.-%, more preferably 0.50 - 3.00 wt.-%, most preferably 0.50 - 2.50 wt.-%, based on the total weight of the adhesive composition, of antimony oxide (ATO) and/or 0.05 - 2.00 wt.-%, preferably 0.10 - 1.50 wt.-%, more preferably 0.10 - 1.00 wt.-%, most preferably 0.15 - 0.50 wt.-%, based on the total weight of the adhesive composition, of zinc borate.

The adhesive composition may further comprise at least one additional thermoplastic polymer different from the at least one atactic poly-α-olefin a) and the at least one hydrocarbon resin b). The at least one additional thermoplastic polymer can be a homopolymer or copolymer of unsaturated monomers, selected, for example, from the group consisting of ethylene, propylene, butylene, isobutylene, isoprene, vinyl acetate and vinyl ester with C₃ to C₁₂ carboxylic acids, styrene, and (meth)acrylate. The term "(meth)acrylate" designates in the present document both acrylates and methacrylates.

Preferably, the at least one additional thermoplastic polymer is selected from the group consisting of homopolymers and copolymers of propylene, ethylene, butylene, isobutylene, isoprene, vinyl acetate, and styrene. The amount of the at least one additional thermoplastic polymer in the adhesive composition is not particularly restricted. The at least one thermoplastic polymer may be present in the adhesive composition in an amount of 0.5 - 30.0 wt.-%, such as 1.0 - 20.0 wt.-%, preferably 1.5 - 15.0 wt.-%, most preferably 2.5 - 10.0 wt.-%, based on the total weight of the adhesive composition.

Preferably, the at least one additional thermoplastic polymer is solid at a temperature of 25 °C. It may also be preferable that the at least one additional thermoplastic polymer has a melting point of at least 100 °C, preferably in the range of 120 - 200 °C, more preferably 130 - 180 °C. The term "melting point" refers in the present document to the maximum of the curve determined according to ISO 11357 standard by means of dynamic differential calorimetry (DSC). At the melting point the material undergoes transition from the solid to the liquid state. The measurements can be performed with a Mettler Toledo 822e device at a heating rate of 2 degrees centigrade/min and the melting point values can be determined from the measured DSC curve with the help of the DSC software.

The adhesive composition of the present invention comprises at least one atactic poly-α-olefin that is solid at a temperature of 25 °C. Atactic poly-α-olefins can be prepared by polymerization of α-olefins, more particularly of ethene, propene, 1-butene, with Ziegler- catalysts or by metallocene catalysts, for example. In contrast to other polyolefins they have an amorphous structure.

Preferably, the at least one atactic poly-α-olefin has a softening point measured by Ring and Ball method according to DIN EN 1238 in the range of 70 - 170 °C, preferably 80 - 140 °C and/or an average weight (Mₙ) of 5'000 - 50'000 g/mol, preferably 7'000 - 25'000 g/mol.

The amount of the at least one atactic poly-α-olefin in the adhesive composition of not particularly restricted. It may be preferable that the at least one atactic poly-α-olefin is present in the adhesive composition in an amount of at least 15 wt.-%, more preferably at least 25 wt.-%, based on the total weight of the adhesive composition. It may also be preferable that the at least one atactic poly-α-olefin is present in the adhesive composition in an amount of 25 - 90 wt.-%, more preferably 30 - 75 wt.-%, even more preferably 35 - 70 wt.-%, most preferably 40 - 60 wt.-%, based on the total weight of the adhesive composition.

The adhesive composition of the present invention comprises at least one hydrocarbon resin having a softening point measured by Ring and Ball method according to DIN EN 1238 in the range of 70 - 160 °C, preferably 75 - 150 °C, even more preferably 75 - 120 °C, most preferably 75 - 100 °C.

The amount of the hydrocarbon resin in the adhesive composition is not subject to any particular restrictions. It may be preferable that the at least one hydrocarbon resin is present in the adhesive composition in an amount of at least 5 wt.-%, more preferably at least 15 wt.-%, based on the total weight of the adhesive composition. It may also be preferable that the at least one hydrocarbon resin is present in the adhesive composition in an amount of 5 - 75 wt.-%, more preferably 10 - 65 wt.-%, even more preferably 15 - 55 wt.-%, most preferably 25 - 45 wt.-%, based on the total weight of the adhesive composition.

Examples of suitable hydrocarbon resins include natural resins, chemically modified natural resins, and synthetic resins.

Examples of suitable natural resins and chemically modified natural resins include rosins, rosin esters, phenolic modified rosin esters, and terpene resins. The term "rosin" is to be understood to include gum rosin, wood rosin, tall oil rosin, distilled rosin, and modified rosins, for example dimerized, hydrogenated, maleated and/or polymerized versions of any of these rosins.

Suitable terpene resins include copolymers and terpolymers of natural terpenes, such as styrene/terpene and alpha methyl styrene/terpene resins; polyterpene resins obtainable from the polymerization of terpene hydrocarbons, such as the bicyclic monoterpene known as pinene, in the presence of Friedel-Crafts catalysts at moderately low temperatures; hydrogenated polyterpene resins; and phenolic modified terpene resins including hydrogenated derivatives thereof.

The term "synthetic resin" refers in the present document to compounds obtained from the controlled chemical reactions such as polyaddition or polycondensation between well-defined reactants that do not themselves have the characteristic of resins. Monomers that may be polymerized to synthesize the synthetic resins may include aliphatic monomer, cycloaliphatic monomer, aromatic monomer, or mixtures thereof. Aliphatic monomers can include C₄, C₅, and C₆ paraffins, olefins, and conjugated diolefins. Examples of aliphatic monomers or cycloaliphatic monomers include butadiene, isobutylene, 1,3-pentadiene, 1,4-pentadiene, cyclopentane, 1-pentene, 2-pentene, 2- methyl-1-pentene, 2-methyl-2-butene, 2-methyl-2-pentene, isoprene, cyclohexane, 1- 3-hexadiene, 1-4-hexadiene, cyclopentadiene, and dicyclopentadiene. Aromatic monomer can include C₈, Cg, and C₁₀ aromatic monomer, such as styrene, indene, derivatives of styrene, derivatives of indene, coumarone and combinations thereof.

In particular, suitable synthetic resins include synthetic hydrocarbon resins made by polymerizing mixtures of unsaturated monomers that are obtained as by-products of cracking of natural gas liquids, gas oil, or petroleum naphthas. Synthetic hydrocarbon resins obtained from petroleum based feedstocks are referred in the present document as "petroleum hydrocarbon resins". These include also pure monomer aromatic resins, which are made by polymerizing aromatic monomer feedstocks that have been purified to eliminate color causing contaminants and to precisely control the composition of the product. Petroleum hydrocarbon resins typically have a relatively low average molecular weight (Mₙ), such in the range of 250 - 5'000 g/mol and a glass transition temperature of above 0 °C, preferably equal to or higher than 15 °C, more preferably equal to or higher than 30 °C.

Preferably, the at least one hydrocarbon resin is a petroleum hydrocarbon resin, more preferably selected from the group consisting of C5 aliphatic petroleum hydrocarbon resins, mixed C5/C9 aliphatic/aromatic petroleum hydrocarbon resins, aromatic modified C5 aliphatic petroleum hydrocarbon resins, cycloaliphatic petroleum hydrocarbon resins, mixed C5 aliphatic/cycloaliphatic petroleum hydrocarbon resins, mixed C9 aromatic/cycloaliphatic petroleum hydrocarbon resins, mixed C5 aliphatic/cycloaliphatic/C9 aromatic petroleum hydrocarbon resins, aromatic modified cycloaliphatic petroleum hydrocarbon resins, and C9 aromatic petroleum hydrocarbon resins as well hydrogenated versions of the aforementioned resins. The notations "C5" and "C9" indicate that the monomers from which the resins are made are predominantly hydrocarbons having 4-6 and 8-10 carbon atoms, respectively. The term "hydrogenated" includes fully, substantially and at least partially hydrogenated resins. Partially hydrogenated resins may have a hydrogenation level, for example, of 50 %, 70 %, or 90 %. According to one or more embodiments, the at least one hydrocarbon resin is an aliphatic C5/C9 petroleum hydrocarbon resin.

The adhesive composition can further comprise at least one polar-modified polyolefin wax. The addition of polar-modified polyolefin waxes has been found to improve the adhesion of the adhesive composition on polar substrates. Suitable polar-modified polyolefin waxes are produced by grafting polar olefin monomers, for example, α-β-unsaturated carboxylic acids and/or derivatives thereof, for example (meth)acrylic acid or maleic acid anhydride and/or substituted and/or unsubstituted styrenes, to polyolefin waxes.

It may be preferable that the adhesive composition further comprises at least one maleic acid anhydride functionalized polyolefin wax, preferably a wax of ethylene and propylene homo- and copolymers grafted with maleic acid anhydride, in particular, a polypropylene or polyethylene wax grafted with maleic acid anhydride.

Preferably, the at least one maleic acid anhydride functionalized polyolefin wax has a softening point, determined by using the Ring and Ball method as defined in DIN EN 1238 standard, of not more than 180 °C, preferably not more than 160 °C. It may be preferable that the at least one maleic acid anhydride functionalized polyolefin wax has a softening point in the range of 80 - 180 °C, more preferably 100 - 160 °C.

The grafting degree of the at least one maleic anhydride functionalized polyolefin wax can be at least 1 wt.-%, for example, at least 3 wt.-%, relative to the weight of the non-functionalized wax. For example, the grafting degree can be in the range of 2 - 15 wt.-%, preferably 4 - 15 % wt.-%, most preferably 8 - 12 wt.-%, relative to the weight of the non-functionalized wax. The at least one maleic anhydride functionalized polyolefin wax may have a melt viscosity at a temperature of 170 °C in the range from 10 to 10'000 mPa·s, in particular, from 1'00 to 5'000 mPa·s.

The at least one maleic anhydride functionalized polyolefin wax may be present in the adhesive composition in an amount of at least 0.5 wt.-%, based on the total weight of the adhesive composition. Preferably, the at least one maleic anhydride functionalized polyolefin wax is present in the adhesive composition in an amount of 0.5 - 15.0 wt.-%, preferably 1.0 - 12.5 wt.-%, more preferably 1.5 - 10.0 wt.-%, most preferably 2.5 - 7.5 wt.-%, based on the total weight of the adhesive composition.

According to one or more embodiments, the adhesive composition of the present invention is a non-reactive polyolefin hot-melt (PO-HM) adhesive.

The adhesive composition may optionally contain additional constituents (auxiliaries) which are customary for hot-melt adhesives. Examples of suitable auxiliaries include fillers, plasticizers, UV absorbers, UV stabilizers and heat stabilizers, antioxidants, optical brighteners, pigments, dyes, and dryers. The auxiliaries, if used at all, preferably comprise not more than 25 wt.-%, more preferably not more than 15 wt.-%, most preferably not more than 5 wt.-%, of the total weight of the adhesive composition.

The adhesive composition of the invention has good workability under usual application conditions, in particular at temperatures from 100 to 200°C, meaning that at application temperature the adhesive has sufficiently low viscosity to enable application to a substrate in a molten state. The adhesive composition also develops a high initial strength immediately after the application to a substrate upon cooling.

Preferably, the adhesive composition has a viscosity at a temperature of 180 °C of less than 50'000 mPa·s, preferably of less than 25'000 mPa·s, most preferably less than 10'000 mPa·s. The viscosity at temperature of 180 °C can be measured using conventional viscometers at 5 revolutions per minute, for example by using a Brookfield DV-2 Thermosel viscometer with a spindle No. 27.

Another subject of the present invention is use of an adhesive for bonding of polystyrene foam plates, preferably extruded expanded (XPS) foam plates, wherein the adhesive comprises:
a) At least one atactic poly-α-olefin that is solid at a temperature of 25 °C and
b) At least one hydrocarbon resin having a softening point measured by Ring and Ball method according to DIN EN 1238 in the range of 70 - 160 °C.

Preferably, the extruded expanded polystyrene foam plates are hydrofluorocarbon free. Suitable polystyrene foam plates, preferably XPS-plates, may have a density of 20 - 80 g/l, preferably 25 - 55 g/l, most preferably 30 - 50 g/l. The density of the polystyrene foam plates is preferably measured using the method as defined in ISO 845 standard.

According to one or more embodiments, the adhesive is the adhesive composition of the present invention.

Still another subject of the present invention is a method for producing a composite element, the method comprising steps of:
i) Applying a melted adhesive composition of the present invention to a first surface of a first substrate to form an adhesive film,
ii) Contacting the adhesive film with a first surface of a second substrate,

The first and second substrates are preferably sheet-like articles having first and second major surfaces defined by peripheral edges or three-dimensional shaped articles. Preferably, at least one of the first and second substrates is a polystyrene foam plate, in particular an extruded expanded polystyrene (XPS) foam plate. Preferably, the polystyrene foam plates are free of hydrofluorocarbons. Suitable polystyrene foam plates, preferably XPS-plates, may have a density of 20 - 80 g/l, preferably 25 - 55 g/l, most preferably 30 - 50 g/l.

As and when required, the first surface of the first and/or second substrate may be pretreated prior to the application of the adhesive composition. Preferably, the first and second substrates are polystyrene foam plates, more preferably extruded expanded polystyrene (XPS) foam plates and the first surface of the first substrate and/or the first surface of the second substrate are free of an extrusion skin. More preferably, the first surface of the first substrate and first surface of the second substrate are free of an extrusion skin. The extrusion skin of the XPS plates can be removed using any conventional technique, such as by milling. In removing the extrusion skin, the closed cells forming the surface of an extruded foam plate are cut open. This type of pre-treatment is typically conducted to improve the adhesive bond strength.

In the method for producing a composite element, the adhesive composition is heated to a temperature above the softening point of the adhesive composition and applied on the first surface of the first substrate in molten state using any conventional technique, for example, by brushing, slot die coating, roller coating, extrusion coating, calender coating, or spray coating. The adhesive composition can be applied to the first surface of the first substrate with a coating weight of, for example, 25 - 200 g/m², preferably 35 - 150 g/m², more preferably 40 - 100 g/m².

The temperature to which the adhesive composition is heated for application depends on the embodiment of the adhesive. It may be preferable that the temperature of the melted adhesive composition in step i) is at least 150 °C, more preferably at least 170 °C, such as 170-220 °C, preferably 180 - 200 °C.

The melted adhesive composition is preferably applied to the first surface of the first substrate to form a continuous adhesive film, which covers at least 90 %, more preferably at least 95 %, most preferably at least 97.5 %, of the first surface of the first substrate.

It may be preferable that the method for producing a composite element comprises a further step i'), in which the adhesive film formed in step i) is reactivated by heating before being contacted with the first surface of the second substrate in step ii). The reactivation temperature depends on the embodiment of the adhesive composition. It may be preferable, for example, that the adhesive film is reactivated by heating to a temperature of 120 - 200 °C, in particular 150 - 190 °C, most preferably 160 - 180 °C. The heating of the adhesive film can be conducted using any conventional technique, such as heating in an oven, heating by air stream, or heating with infrared (IR)-radiation. The reactivated adhesive film is preferably contacted with the second surface of the second substrate within short time after the reactivation temperature is reached, in any case within the open time of the adhesive composition.

Typically, the adhesive bond has a thickness of at least 10 µm. The term "thickness of adhesive bond" refers here to the thickness of the cured adhesive film between the first and second substrate. It may be preferable that the adhesive bond has a thickness of 10 - 1000 µm, such as 25 - 500 µm, preferably 50 - 150 µm.

Another subject of the present invention is a composite element comprising:
a) A first substrate,
b) A layer of adhesive composition of the present invention, and
c) A second substrate, wherein
the layer of adhesive composition is arranged between the first and second substrates such that the substrates are adhesively bonded to each other with the layer of adhesive composition.

Preferably, at least one of the first and second substrates is a polystyrene foam plate, in particular an extruded expanded polystyrene (XPS) foam plate. Preferably, the polystyrene foam plates are free of hydrofluorocarbons. Suitable polystyrene foam plates, preferably XPS-plates, may have a density of 20 - 80 g/l, preferably 25 - 55 g/l, most preferably 30 - 50 g/l.

Preferably, the first and second substrates are polystyrene foam plates, more preferably extruded expanded polystyrene (XPS) foam plates. It may be preferable that the inner surfaces of the first and second substrates, which are in direct contact with the layer of adhesive composition, are free of an extrusion skin.

### Examples

The followings compounds and products shown in Table 1 were used in the examples.

**Table 1**

| | | |
|---|---|---|
| APAO | Atactic poly-α-olefin, softening point 100 - 140 °C | Evonik Industries |
| TP | Thermoplastic polymer, MFI (230 °C/2.16 kg) 25 - 50 g/10 min | Total Petrochemicals |
| HC resin | C5/C9 hydrocarbon resin, softening point 70 - 100 °C | Zeon Europe |
| Stabilizer | Sterically hindered phenolic antioxidant | Ciba Specialty Chemicals |
| FR1 | Organic flame retardant (BDDP) | |
| FR2 | Organic flame retardant (DPE) | |
| FR3 | Organic brominated flame retardant with synenergist | |
| ATO | Antimony oxide | |
| ZnBO3 | Zinc Borate | |

The adhesive compositions were prepared by mixing the ingredients as presented in Table 2 under vacuum and with stirring at a temperature of 190 °C for 1 hour. The adhesive compositions were then characterized using the following measurement methods.

### Viscosity at 180 °C

The sample adhesive composition provided in a sealed tube was preheated in an oven at a temperature of 180 °C for a time period of 20 minutes. After the heating, a sample of 9.5 g of the adhesive composition was weighted and placed in a disposable sleeve to a viscometer. The viscosity was measured at temperature of 180 °C at 5 revolutions per minute using a Brookfield DV-2 Thermosel viscometer with a spindle No. 27. The values obtained with 20 minutes of tempering at the measurement temperature and five minutes of measurement were recorded as representative viscosities.

### Softening point

The sample adhesive composition provided in a sealed tube was preheated in an oven at a temperature of 200 °C for a time period of 20 minutes. The molten adhesive was applied bubble free in a metal ring. After cooling the disk-shaped adhesive specimen was removed from the ring and loaded into fitting of a ring and ball tester. The temperature of the adhesive specimen is increased by 6 °C per minute and the temperature at which the ball placed on the adhesive specimen falls through the specimen is recorded as the softening point. The values of softening point presented in Table 2 have been obtained as an average of two measurements conducted with the same adhesive composition.

### Open time

The sample adhesive composition provided in a sealed tube was first preheated in an oven to at temperature of 200 °C for a time period of 20 minutes. After the heating, a sample of 20 g of the molten adhesive was applied with a doctor blade to surface of a silicone paper strip (B700 white, Laufenberg & Sohn KG) placed on a heating plate. The silicone paper strip had dimensions of 30 cm x 10 cm and the adhesive was applied as a film having a thickness of 500 µm and dimensions of 30 cm x 6 cm. Before applying the adhesive film, the silicone paper strip and the doctor blade were heated to a temperature of 200 °C with the heating plate.

Immediately after application of the adhesive, the silicone paper strip was removed from the heating plate and placed (with the adhesive film facing upwards) on a sheet of plywood at room temperature (23°C) and the time was recorded as the starting point of the measurement. Every 10 seconds a short strip of silicone coated paper having dimensions of 10 cm x 1 cm and formed in a roll (non-siliconized surface facing outwards) was placed on the adhesive film and then slowly removed to separate the strip from the adhesive film. The procedure was repeated until the adhesive no longer could be transferred to the paper strip, i.e. the surface of the removed paper strip remained dry without any adhesive. The time interval between the starting point of the measurement and the last sampling point was recorded as the open time (in seconds) of the adhesive composition.

The values of open time presented in Table 2 have been obtained as an average of three measurements conducted with the same adhesive composition.

### Shear adhesion failure temperature (SAFT)

For the SAFT-measurement, composite specimens consisting of two polypropylene plates bonded to each other using the tested adhesive composition were first produced. The composite specimens were then stored at normal room temperature for 24 hours to ensure full curing of the adhesive bond. The composite specimens were suspended vertically from one end of the first polypropylene plate on a metal hook and placed in an oven, which was preheated to a temperature of 40°C. A metal weight corresponding to a static load of 1 kg was attached to another metal hook fixed on the lower end of the second polypropylene plate. Three test specimens at a time were placed in the oven for the SAFT measurement.

At the beginning of the measurement, the test specimens were kept in the oven at a temperature of 40°C for a time period of 30 minutes. Then the temperature of the oven was increased at a rate of 0.37 % per minute. The temperature was increased until the adhesive bonds of all test specimens in the oven had been failed. In case the standard deviation calculated from the measured adhesion failure temperatures of the three test specimens was more than 5.0°C, the test was repeated with three new test specimens. The temperature of the oven at the time of adhesion failure was recorded as the respective SAFT value.

The SAFT values presented in Table 2 have been obtained as an average of measurements conducted with two identical test specimens prepared with samples of the same adhesive composition.

### Tensile strength

For the tensile strength measurement, composite specimens consisting of two XPS plates having a thickness of 30 mm bonded to each other using the tested adhesive composition were first produced. In order to bond the XPS plates together, the tested adhesive was applied on the surface of one of the plates with a coating weight of ca. 50 g/m². The XPS-plates had a density of 45 - 55 kg/m³ and contained a halogen containing flame retardant in an amount of 2.5 - 3.0 wt.-%.

The tensile strengths were determined using the method as defined in FprEN 1607:2012 standard at normal room conditions (temperature of 23 °C and 50 % relative humidity) and at temperature of 60 °C.

### Flammability test

For the flammability test, composite specimens consisting of two XPS plates having dimensions of (290 x 90 x 30 mm) bonded to each other using the tested adhesive composition were first produced. In order to bond the XPS plates together, the tested adhesive was applied on the surface of the plate with a coating weight of ca. 50 g/m². The XPS-plates had a density of 45 - 55 kg/m³ and contained a halogen containing flame retardant in an amount of 2.5 - 3.0 wt.-%.

The flammability test was conducted according to the method as defined in EN ISO 11925-2:2011-02 standard ("Ignitability of products subjected to direct impingement of flame"). The result of the test was either "Ok" if the test was passed or "Not ok" in case the composite element failed the test. According to the standard, the flammability test is failed if the maximum flame height during burning time of 20 seconds exceeds 150 mm or if the flaming droplets/particles ignite the filter paper positioned under the burning test specimen.

**Table 2**

| **Adhesive composition [wt.-%]** | **C Ex-1** | **C Ex-2** | **Ex-1** | **C Ex-3** | **C Ex-4** | **Ex-2** | **Ex-3** |
|---|---|---|---|---|---|---|---|
| APAO | 53.5 | 52.5 | 50 | 51 | 48 | 46 | 53 |
| TP | 4.98 | 5 | 5 | 5 | 5 | 5 | 5 |
| HC resin | 40 | 40 | 40 | 40 | 40 | 40 | 40 |
| Stabilizer | 1 | 1 | 1 | 1 | 1 | 1 | 1 |
| FR1 | 0.52 | 2.4 | 4 | 0 | 0 | 0 | 0 |
| FR2 | 0 | 0 | 0 | 3 | 6 | 8 | 0 |
| FR3 | 0 | 0 | 0 | 0 | 0 | 0 | 1 |
| ATO | 0.26 | 0.1 | 0.48 | 1 | 2 | 1.92 | 0 |
| ZnBO₃ | 0 | 1.1 | 0.2 | 0.5 | 1 | 0 | 0 |
| Total | 100.00 | 100.00 | 100.00 | 100.00 | 100.00 | 100.00 | 100.00 |
| Viscosity at 200 °C [MPa·s] | n.a. | n.a. | 2075 | n.a. | n.a. | 3225 | n.a. |
| Softening point [°C] | n.a. | n.a. | 153 | n.a. | n.a. | 153 | n.a. |
| Open time, 500 µm [seconds] | n.a. | n.a. | 90 | n.a. | n.a. | 100 | n.a. |
| SAFT [°C] | n.a. | n.a. | 95 | n.a. | n.a. | 95 | n.a. |
| Tensile strength, at 60 °C [kPa] | 46 | n.a. | 61 | 98 | n.a. | 75 | n.a. |
| Tensile strength, at 23 °C [kPa] | 222 | n.a. | 215 | 367 | n.a. | 236 | n.a. |
| Flammability test result | Not ok | Not ok | Ok | Not ok | Not ok | Ok | Ok |
| Maximum flame height [cm] | 12 | 8 | 12 | 9 | 9 | 12 | 10 |
| Flaming droplets/particles | Yes | Yes | No | Yes | Yes | No | No |

## Claims

1. An adhesive composition comprising:
a) At least one atactic poly-α-olefin that is solid at a temperature of 25 °C,
b) At least one hydrocarbon resin having a softening point measured by Ring and Ball method according to DIN EN 1238 in the range of 70 - 160 °C, and
c) At least one halogen containing flame retardant.

2. The adhesive composition according to claim 1, wherein the at least one halogen containing flame retardant is present in the adhesive composition in an amount of 0.25 - 20.0 wt.-%, more preferably 0.5 - 15.0 wt.-%, based on the total weight of the adhesive composition.

3. The adhesive composition according to claim 1 or 2, wherein the at least one halogen containing flame retardant is a brominated flame retardant.

4. The adhesive composition according to any of previous claims, wherein the at least one halogen containing flame retardant is selected from the group consisting of tetradimensionale A bis (2,3-dibromopropylether), tetrabromobisphenol A bis (2,3-dibromo-2-methylpropyl ether), decabromodiphenyl ethane, decabromodiphenyl oxide, ethylenebistetrabromo phthalimide, bis (tribromophenoxy) ethane, 2,4,6 tris(2,4,6 tribromophenoxy) 1,3,5 triazine, and tris (2,3 dibromopropyl) isocyanurate, preferably from the group consisting of tetradimensionale A bis (2,3-dibromopropylether), tetrabromobisfenol A bis (2,3-dibromo-2-methylpropyl ether), and decabromodiphenyl ethane.

5. The adhesive composition according to any of previous claims further comprising at least one of antimony oxide and zinc borate.

6. The adhesive composition according to any of previous claims further comprising 0.05 - 5.00 wt.-% of antimony trioxide (ATO) and/or 0.05 -2.00 wt.-% of zinc borate.

7. The adhesive composition according to any of previous claims further comprising at least one additional thermoplastic polymer different from the at least one atactic poly-α-olefin and the at least one hydrocarbon resin, wherein the at least one additional thermoplastic polymer is selected from the group consisting of homopolymers and copolymers of propylene, ethylene, butylene, isobutylene, isoprene, vinyl acetate, and styrene.

8. The adhesive composition according to any of previous claims, wherein the at least one atactic poly-α-olefin has a softening point measured by Ring and Ball method according to DIN EN 1238 in the range of 70 - 170 °C, preferably 80 - 140 °C and/or the at least one atactic poly-α-olefin is present in the adhesive composition in an amount of 25 - 90 wt.-%, preferably 30 - 75 wt.-%, based on the total weight of the adhesive composition.

9. The adhesive composition according to any of previous claims the at least one hydrocarbon resin is a petroleum hydrocarbon resin.

10. The adhesive composition according to any of previous claims, wherein the adhesive composition is a non-reactive polyolefin hot-melt (PO-HM) adhesive.

11. Use of an adhesive for bonding of polystyrene foam plates, preferably extruded expanded (XPS) foam plates, wherein the adhesive comprises:
a) At least one atactic poly-α-olefin that is solid at a temperature of 25 °C and
b) At least one hydrocarbon resin having a softening point measured by Ring and Ball method according to DIN EN 1238 in the range of 70 - 160 °C.

12. The use according to claim 11, wherein the adhesive is the adhesive composition according to any of claims 1-10.

13. A method for producing a composite element, the method comprising steps of:
i) Applying a melted adhesive composition according to any of claims 1-10 to a first surface of a first substrate to form an adhesive film,
ii) Contacting the adhesive film with a first surface of a second substrate.

14. The method according to claim 13, wherein the first and second substrates are extruded expanded polystyrene (XPS) foam plates and wherein the first surface of the first substrate and/or the first surface of the second substrate is free of an extrusion skin.

15. The method according to claim 13 or 14, wherein the melted adhesive composition is applied to the first surface of the first substrate with a coating weight of 35 - 150 g/m².

16. A composite element comprising:
a) A first substrate,
b) A layer of adhesive composition according to any of claims 1-10, and
c) A second substrate, wherein the layer of adhesive composition is arranged between the first and second substrates such that the substrates are adhesively bonded to each other with the layer of adhesive composition.
